# EUROPEAN PATENT SPECIFICATION

(11) **EP 1 296 526 B1**
(45) Date of publication and mention of the grant of the patent: **13.10.2010**
(21) Application number: 02292092.0
(22) Date of filing: 23.08.2002
(51) Int. Cl.: H04N 7/50, H04N 7/36

(54) **Video coding method according to the MPEG standard**
MPEG-entsprechendes Videokodierungsverfahren
Méthode de codage vidéo selon la norme MPEG

(30) Priority: 24.09.2001 FR 0112251
(43) Date of publication of application: 26.03.2003
(73) Proprietor: Thomson Licensing, 92130 Issy-les-Moulineaux (FR)
(72) Inventor: Francis, Edouard, 35890 Bourg-des-Comptes (FR); Thoreau, Dominique, 35510 Cesson-Sevigne (FR); Bordes, Philippe, 35890 Laille (FR)
(74) Representative: Ruellan-Lemonnier, Brigitte

(56) References cited:
- US-A- 5 592 226
- US-A- 5 909 252
- US-A- 6 057 893

## Description

The invention relates to a process of coding and of decoding with temporal prediction.

The standards involved are for example H261, H263, MPEG, generally the standards based on blockwise image coding and on motion compensation.

Such standards describe the chopping of an image into windows of 16 × 16 pixels called macroblocks. The content of the image is encoded macroblock by macroblock. When temporal prediction is utilized for the coding, a macroblock may be predicted on the basis of a past or future image, when considering the order of display rather than the order of coding of the images, with the aid of one or more motion vectors per macroblock.

The remainder of the document will speak either of image or of VOP (Video Object Plane). This is a concept introduced by the MPEG4 standard which defines a video object plane, that is to say the photograph of a video object at a given instant. A VOP is a rectangular image, whose size may vary over time, consisting of a form, for example a binary mask, and of a texture. The principles described hereinbelow relate equally well to the rectangular conventional images of the MPEG2 standard and to the VOPs of the MPEG4 standard.

The transmission of data streams over heterogeneous networks or over the Internet frequently generates transmission errors. The decoder is then faced with the reconstruction of missing pieces of images. Most of the digital recording media and communication channels are not protected against errors.

The MPEG standard supports modes which are robust to errors.

Among the existing tools for limiting the problems due to transmission errors, a first means called resynchronization consists in inserting resynchronization markers into the stream, defining video packets.

A second level of protection making it possible to mask errors (referred to as error concealment in the standard) consists of a partitioning of the data in the video packets relating to the I and P images. The headers of the macroblocks are placed at the start of the video packet and the texture macroblocks are placed thereafter, separated by a marker inside the video packet. If the texture data are lost, the images may be reconstructed from the motion information.

Another level of protection allowing the recovery of the data consists in utilizing a reversible variable-length code RVLC for the texture data. A transmission error detected in the stream thus makes it possible to take up position on the synchronization word of the next video packet and to perform backward decoding.

Another means relates to the modes of coding the macroblocks. A refreshing of macroblocks in intra mode, that is to say a forcing of the mode of coding of a macroblock to intra mode is performed periodically to limit the propagations of errors due to the inter coding. However, such coding in intra mode is expensive in terms of coding bits.

Document US-A-5592226 discloses a video coding method with coding decisions (e.g. Inter/Intra, Q) selection at picture level.

Such document shows that both the last P-frame before a scene change and the first I-frame after the scene change can be quantised more coarsely than normal, thereby achieving a data rate reduction.

Nevertheless, such method only partially solves the problem of increasing the coding bits in intra mode.

The aim of the invention is to limit the aforesaid drawbacks.

Accordingly, the subject of the invention is a process for coding an image sequence, an image being split into macroblocks, e.g. according to the MPEG standard, **characterized in that** it calculates for the current macroblock to be coded, its predicted position, in a next image or vop, by considering the coding order of the images, and in that a coding parameter for the current macroblock is calculated depending on whether or not said predicted macroblock position lies outside the next image or vop.

According to a particular implementation of the invention, the coding parameter is the intra or inter mode of coding or quantization interval for the TCD coefficients of the macroblock.

According to another particular implementation of the invention, the coding parameter also takes into account the number of B images or B-vops situated between the image or current P vop and the image or next P vop.

According to a variant of the invention, the error masking algorithm, for a macroblock, based on a random refreshing of the macroblocks by intra coding of these macroblocks, takes into account the predicted position of this macroblock in the next image or vop.

According to another variant of the invention, the positioning of resynchronization markers corresponding in the MPEG4 standard to the start of the video packets, takes into account the predicted position of the macroblock, it also being possible to modify the size of the packets as a function of the number of macroblocks which they enclose having a position predicted outside the image.

According to another variant of the invention, during a coding utilizing the extensions to scalability to improve the accuracy of coding, this improvement is reduced or removed for the macroblocks whose predicted position lies outside the next image.

The invention proposes, for each macroblock MB, the adapting of the coding parameters for this macroblock as a function of its position predicted at the next instant. The idea is to limit the cost of coding this macroblock if there is a high probability of this macroblock lying outside the vop or the image at the next instant. It involves for example not performing the forcing to intra mode during the refreshing of a macroblock in intra mode, if this macroblock might disappear from the scene, that is to say vanish from the image for a next image.

The main advantage of the invention is to limit the costs of coding an image sequence.

Other features and advantages of the invention will appear clearly in the following description given by way of non-limiting example and with regard to the appended figures which represent:
- Figure 1, a current macroblock in an image whose predicted macroblock lies inside the image,
- Figure 2, a current macroblock in an image whose predicted macroblock lies outside the image,
- Figure 3, an algorithm implementing the process according to the invention.

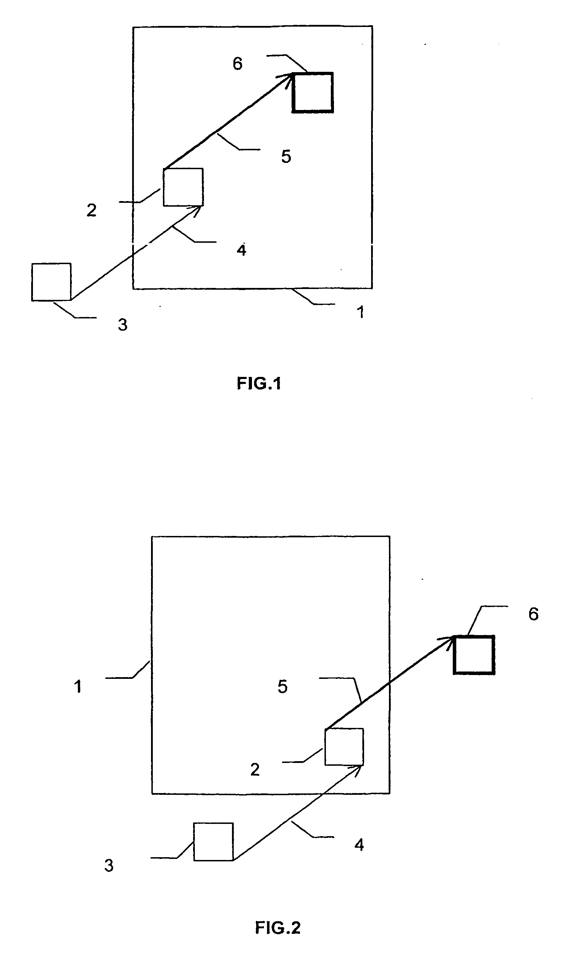

Figure 1 represents an image or vop 1 and a current macroblock 2 inside the image. With this macroblock is associated a motion vector 4 which makes it possible to define a predicted macroblock 3 in the previous (according to the order of coding) reconstructed image, this image not being represented in the figure. The motion vector 4 which corresponds to the estimated motion of the current macroblock 2 is utilized to predict the position of this current macroblock in the next image. It is thus assumed that the motion continues from one image to another. The displacement corresponding to the motion vector 4 is thus applied to the current macroblock 2 to yield a new position, referenced 6 in the figure, of the macroblock. This is the predicted position of the current macroblock or predicted macroblock for the next image

Two cases may arise:

Either the predicted macroblock lies wholly or partly in the image. Such is the case in Figure 1. In this case, no coding restriction is imposed on the current macroblock. The coder decides the mode of coding of the macroblock. There is no constraint related to the analysis of the position of the predicted macroblock. The macroblock can be coded in intra mode for an intra refresh as indicated previously.

Or the predicted macroblock lies completely outside the image. Such is the case in Figure 2 where the predicted macroblock 6 is outside the image 1.

In this latter case, the mode of coding of the current macroblock 2 is modified in one or other (or more) of the following ways:
- the mode of coding as forced intra, that is to say by refreshing, is prohibited. The intra coding is always possible in the case where the intra coding of the macroblock is less expensive than the inter mode of coding.
- in the case where the coding implements an algorithm for the periodic refreshing of the macroblocks by intra coding, this procedure is reinitialized for the current macroblock.

In order to share out the cost of coding an image generated by an intra refresh, the macroblocks are not forced simultaneously to intra but in turn. The refresh is done macroblock by macroblock. In general, counters assigned to each macroblock of the image and carrying out a looped count are initialized in a random manner, for example when coding the first image of the sequence or GOP (Group of Pictures) in intra mode, so as to share out this coding cost. The loop counting is achieved over a number N corresponding for example to the number of images constituting a GOP, the counter is incremented at each coding and the refresh takes place while passing from N to zero. Within the framework of the invention, the counter is reinitialized when the forced intra mode of coding is prohibited. Thus, the algorithm, by repositioning the counter to zero, prohibits the refreshing of the macroblock corresponding to the position of the current macroblock, for the subsequent images. The refresh will be done only after N new codings for this position of the macroblock.
- the quantization interval for the coding of the coefficients of the macroblock is forced to a high value or to a value greater than that calculated so as to reduce the cost of coding the macroblock which is presumed to disappear during the next images. This forcing may depend on the type of transmission, a low bit rate transmission permitting a reduced quality of decoding and hence a larger tolerance on the effects of blocks generated by quantization intervals which are too different from one macroblock to a neighbouring macroblock. The value of the quantization interval may also take into account the number of images of B type flanked by the current image and the next image of P type, the coding of the macroblocks of an image of B type making reference to the macroblocks of an image of P type.
- in the case of coding utilizing the extensions to scalability, for example of SNR type (signal to noise ratio) such as fgs (fine granularity scalability), the coding consisting of a lower layer of coding of the DCT coefficients and one or more improvement layers, for refining the DCT coefficients, the procedure for coding these coefficients for the improvement layers is modified by reducing the number of coding bits, for example by allocating fewer bit planes than scheduled.

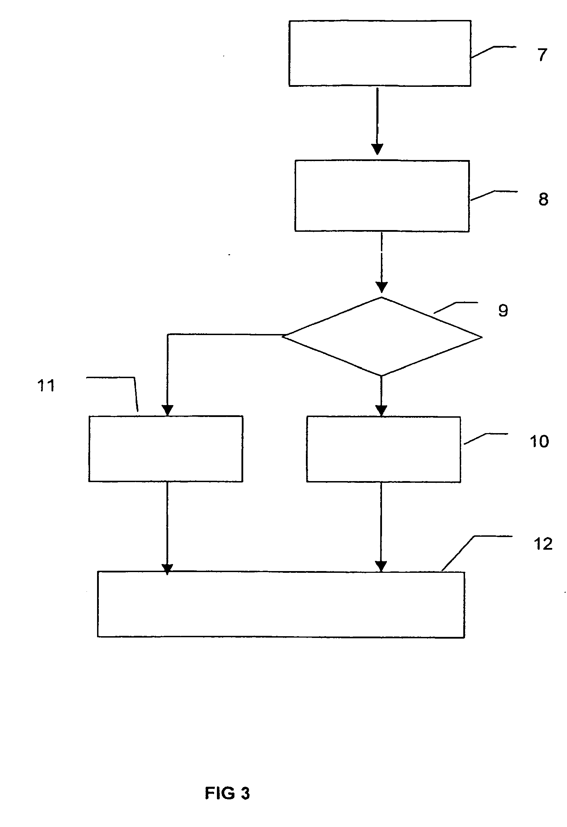

Figure 3 represents an algorithm implementing the process according to the invention.

A first step 7 consists of a calculation of the motion vectors for a current macroblock.

The next step 8 calculates the position of this current macroblock for the next image, by extrapolating the displacement of the macroblock on the basis of the motion vector assigned to it. The next step 9 determines whether the position of the macroblock is inside or outside the image.

In the case where the predicted position of the macroblock lies at least partly inside the image, the next step is step 10 which determines the parameters for coding the macroblock in a conventional manner.

In the case where the predicted position of the macroblock lies wholly outside the image, the next step is step 11 which forces coding parameters as indicated previously. For example, the intra mode of coding is prohibited.

The next step, which is step 12, performs the coding of the macroblock as a function of the coding parameters determined in the previous step.

The algorithm proposed can take the form of an extra block added to an encoder to carry out the supplementary steps 8, 9 and 11, so as to improve the distribution of bits among the various macroblocks of an image or a VOP. Moreover, the process can be used in deciding the intra coding mode for the P-VOPs in the context of robustness to errors.

The prediction of the macroblock is performed on the basis of a motion estimate. The latter may correspond to a simple copy of the motion vector assigned to the current macroblock and therefore carrying out an extrapolation of this motion. The motion may also be estimated in a more complex manner, for example on the basis of modelling the motion field.

The MPEG 4 standard defines resynchronization markers in the MPEG data stream, the data between two markers corresponding to a video packet. A variant of the invention consists in taking account of the predicted position of the macroblocks in respect of the choice of position of the marker in the data stream. Thus, it may be decided not to place any resynchronization marker before a macroblock which ought to vanish from the image or too closely preceding such a macroblock. It is in fact rather inefficient to resynchronize the data stream with regard to forthcoming data of low importance. The data relating to a vanishing macroblock will not actually be used subsequently to predict and reconstruct macroblocks. This positioning may also take into account the density, in the stream, of the macroblocks which are to vanish from the image or depend on the gap, in the stream, between a marker and such a macroblock.

Likewise, the size of a packet situated between two resynchronization markers can be calculated as a function of the number of macroblocks which are to vanish from the image, which it encloses. The size may be larger for packets containing many macroblocks scheduled to vanish from the image and may be reduced in the converse case. The loss of information is in fact less of an impediment in respect of macroblocks which are to vanish from the image and the resynchronization can consequently be spaced further apart in respect of packets containing such macroblocks.

The codings of MPEG type utilize various types of scalability such as spatial scalability to improve the accuracy of coding. The fgs coding (fine granularity scalability) for example utilizes several levels of resolution for the coding of the macroblocks. A variant of the invention consists in making this coding accuracy relating to the improvement of accuracy depend on the status of the macroblock, that is to say on whether or not the macroblock has a predicted position outside the image. It is thus possible to reduce the number of layers or to code the dct coefficients for these improvement layers more coarsely, in respect of the macroblocks whose predicted position is outside the image or the vop.

## Claims

1. Process for coding an image sequence, an image being split into macroblocks, **characterized in that**
- it calculates (8, 9), for the current macroblock to be coded, its predicted position (6), in a next image or vop, by considering the coding order of the images, and **in that**
- a coding parameter for the current macroblock (10, 11) is calculated depending on whether or not said predicted macroblock position (6) lies outside the next image or vop.

2. Process according to Claim 1, **characterized in that** the coding parameter is the intra or inter mode of coding.

3. Process according to Claim 1, **characterized in that** the coding parameter is the quantization interval for the TCD coefficients of the macroblock.

4. Process according to Claim 2 or 3, **characterized in that** the coding parameter also takes into account the number of B images or B-vops situated between the image or current P vop and the image or next P vop.

5. Process according to Claim 1, **characterized in that** the error masking algorithm, for a macroblock, based on a random refreshing of the macroblocks by intra coding of these macroblocks, takes into account the predicted position of this macroblock in the next image or vop.

6. Process according to Claim 1, **characterized in that** the positioning of resynchronization markers defining the start of the video packets coding the images, in the MPG4 standard, takes into account the predicted position of a macroblock.

7. Process according to Claim 1, **characterized in that** the size of the video packets coding the images and defined by the position of resynchronization markers, in the MPG4 standard, takes into account the number of macroblocks which they enclose having a predicted position outside the image.

8. Process according to Claim 1, **characterized in that** during a coding utilizing the extensions to scalability corresponding to one or several supplementary coding layers, to improve the accuracy of coding, this layer is removed or the number of layers is reduced for the macroblocks whose predicted position lies outside the next image.

## Patentansprüche

1. Verfahren zur Kodierung einer Bildfolge, wobei ein Bild in Makroblöcke aufgeteilt wird
**dadurch gekennzeichnet, dass**
- es für den augenblicklichen zu kodierenden Makroblock seine vorhergesagte Position (6) berechnet (8, 9) in einem nächsten Bild oder einer Videoobjektebene (VOP = video object plane), durch Berücksichtigung der Kodierfolge der Bilder und dadurch, dass
- ein Kodierparameter für den augenblicklichen Makroblock (10, 11) berechnet wird, abhängig davon, ob oder ob nicht der vorhergesagte Makroblockposition (6) ausserhalb des nächsten Bildes oder Videoobjektebene (VOP) liegt.

2. Verfahren nach Anspruch 1
**dadurch gekennzeichnet, dass**
der Kodierparameter der Kodierungs- Intra- oder Intermodus ist.

3. Verfahren nach Anspruch 1
**dadurch gekennzeichnet, dass**
der Kodierparameter die Quantifizierungsintervalle für die TCD-Koeffizienten des Makroblocks sind.

4. Verfahren nach Anspruch 2 und 3
**dadurch gekennzeichnet, dass**
der Kodierparameter auch die Anzahl an B-Bildern oder B-VOPs (Videoobjektebene) in Betracht zieht, die zwischen dem Bild oder augenblicklichen P VOP und dem Bild oder nächsten P VOP gelegen sind.

5. Verfahren nach Anspruch 1
**dadurch gekennzeichnet, dass**
der Algorithmus der Fehlermaskierung für einen Makroblock auf der Basis der willkürlichen Auffrischung der Makroblöcke durch Intrakodierung dieser Makroblöcke, die vorhergesagte Position dieses Makroblockes im nächsten Bild oder VOP in Betracht zieht.

6. Verfahren nach Anspruch 1
**dadurch gekennzeichnet, dass**
die Positionierung von Resynchronisierungskennungen, die den Beginn der Videopakete, die die Bilder kodieren im MPG4 Standard, die vorhergesagte Position eines Makroblocks in Betracht zieht.

7. Verfahren nach Anspruch 1
**dadurch gekennzeichnet, dass**
die Grösse der Videopakete, die die Bilder kodieren und durch die Position der Resynchronisierungskennungen bestimmt sind im MPG4 Standard, die Anzahl an Makroblöcken, die sie einschliessen und eine vorhergesagte Position ausserhalb des Bildes haben, in Betracht zieht.

8. Verfahren nach Anspruch 1
**dadurch gekennzeichnet, dass**
während einer Kodierung, die die Verlängerung der Skalierbarkeit benutzt, die einer oder mehreren zusätzlichen Kodierungsschichten entspricht, um die Genauigkeit der Kodierung zu verbessern, wird diese Schicht entfernt, oder die Anzahl der Schichten für die Makroblöcke verringert, deren vorausgesagte Position ausserhalb des nächsten Bildes liegt.

## Revendications

1. Procédé pour le codage d'une séquence d'images, une image étant découpée en macroblocs, **caractérisé en ce que :**
- il calcule (8, 9), pour le macrobloc courant à coder, sa position prédite (6) dans une image ou vop suivant, en considérant l'ordre de codage des images, et **en ce que**
- un paramètre de codage pour le macrobloc courant (10, 11) est calculé dépendant du fait que ladite position du macrobloc (6) prédit se trouve ou non en dehors de l'image ou vop suivant.

2. Procédé selon la revendication 1, **caractérisé en ce que** le paramètre de codage est le mode de codage en inter ou en intra.

3. Procédé selon la revendication 1, **caractérisé en ce que** le paramètre de codage est le pas de quantification des coefficients TCD du macrobloc.

4. Procédé selon la revendication 2 ou 3, **caractérisé en ce que** le paramètre de codage prend également en compte le nombre d'images B ou B-vops situés entre l'image ou vop P courant et l'image ou vop P suivant.

5. Procédé selon la revendication 1, **caractérisé en ce que** l'algorithme de masquage d'erreur, pour un macrobloc, basé sur un rafraîchissement aléatoire des macroblocs par codage en intra de ces macroblocs, prend en compte la position prédite de ce macrobloc dans la prochaine image ou vop.

6. Procédé selon la revendication 1, **caractérisé en ce que** le positionnement de marqueurs de resynchronisation définissant le début des paquets vidéo codant les images, dans la norme MPG4, prend en compte la position prédite d'un macrobloc.

7. Procédé selon la revendication 1, **caractérisé en ce que** la taille des paquets vidéo codant les images et définis par la position de marqueurs de resynchronisation, dans la norme MPG4, prend en compte le nombre de macroblocs qu'ils renferment ayant une position prédite à l'extérieur de l'image.

8. Procédé selon la revendication 1, **caractérisé en ce que** lors d'un codage exploitant les extensions à l'échelonnabilité correspondant à une ou plusieurs couches de codage supplémentaires pour améliorer la précision de codage, cette couche est supprimée ou le nombre de ces couches est réduit pour les macroblocs dont la position prédite se trouve à l'extérieur de l'image suivante.
